# FASCICULE DE BREVET EUROPEEN

(11) **EP 0 397 546 B1**
(45) Date de publication et mention de la délivrance du brevet: **14.12.1994**
(21) Numéro de dépôt: 90401186.3
(22) Date de dépôt: 02.05.1990
(51) Int. Cl.: H04K 3/00

(54) **Procédé et dispositif de transmission de l'information entre émetteurs-récepteurs radioélectriques, d'un même réseau fonctionnant en évasion de fréquence**
Verfahren und Einrichtung zur Informationsübertragung zwischen Funksender-Empfänger desselben nach dem Frequenzsprungverfahren arbeitenden Netzes
Method and apparatus for information transmission between radio transceivers of the same frequency hopping network

(30) Priorité: 10.05.1989 FR 8906104
(43) Date de publication de la demande: 14.11.1990
(73) Titulaire: THOMSON-CSF, 75008 Paris (FR)
(72) Inventeur: DELAPERRIERE, Jean-Paul, F-92045 Paris la Défense (FR); EBERLAND, Alain, F-92045 Paris la Défense (FR); SINGLAS, Yves, F-92045 Paris la Défense (FR)
(74) Mandataire: Lincot, Georges

(56) Documents cités:
- EP-A- 0 182 762
- DE-A- 3 415 032
- GB-A- 2 203 314
- IEEE THE 14TH CONVENTION OF ELECTRICAL & ELECTRONICS ENGINEERS IN ISRAEL, Tel Aviv, 26-28 mars 1985, pages 1.1.7.1-1.1.7.5, IEEE, New York, US;J.M. PERL et al.: "Mesa - a real time HF frequency management system"

## Description

La présente invention concerne un procédé et un dispositif de transmission de l'information entre émetteurs-récepteurs radioélectriques d'un même réseau fonctionnant en évasion de fréquence.

Il est connu dans le domaine des transmissions radioélectriques en haute fréquence, que l'encombrement spectral dépend des conditions de propagation et des zones géographiques au dessus desquelles s'effectuent les transmissions.

Lorsque les conditions de propagation sont mauvaises, les récepteurs perçoivent à la fois des émissions provenant d'émetteurs proches comme d'émetteurs éloignés et la juxtaposition des signaux qui en résultent nuit à l'intelligibilité des informations utiles reçues par le récepteur.

Le phénomène est d'autant plus sensible dans le mode de fonctionnement en évasion de fréquence, où la fréquence porteuse des informations transmises change plusieurs fois par seconde car ces modifications de fréquence ne tiennent pas compte de l'encombrement spectral. Dans ces types de fonctionnement chaque récepteur reçoit en effet en plus du signal utile, un signal parasite qui crée une gêne plus ou moins importante qui peut aller jusqu'à la perte de l'information utile lorsque le rapport entre les niveaux du signal parasite et du signal utile est élevé. Une première solution à ces difficultés est connue de la demande de brevet EP-A-0 182 762. Mais la solution qui est décrite et qui permet à deux stations radioélectriques fonctionnant en évasion de fréquence de trouver un plan de fréquence exploitable, n'est pas directement transposable à un réseau formé par plus de deux stations émettrices-réceptrices synchronisées entre elles par une station maître et éventuellement très éloignées les unes des autres.

Le but de l'invention est de pallier les inconvénients précités.

A cet effet, l'invention a pour objet, un procédé de transmission de l'information entre émetteurs-récepteurs radioélectriques d'un même réseau fonctionnant en évasion de fréquence consistant
- à rechercher au moyen d'au moins un poste émetteur-récepteur un plan de fréquences exploitables,
- à transmettre le plan de fréquences exploitables aux autres émetteurs-récepteurs du réseau,
- et à effectuer les transferts des communications en évasion de fréquence sur le plan des fréquences exploitables transmis à l'ensemble des émetteurs-récepteurs du réseau, et

caractérisé en ce que la recherche d'un plan de fréquences exploitables est effectuée dans un plan de fréquences de base prédéterminé et est exécuté par l'émetteur-récepteur maître de la synchronisation dans le réseau qui effectue : une sélection dans les canaux qu'il reçoit, de celui qui présente le niveau de réception le plus faible pour déterminer un premier seuil minimum de comparaison, un calcul à partir du premier seuil d'un deuxième seuil de comparaison supérieur au premier seuil et un repérage dans les autres canaux reçus de ceux dont les niveaux de réception donnent des niveaux de comparaison correspondants compris entre le premier seuil et le deuxième seuil.

L'invention a également pour objet un émetteur-récepteur radioélectrique fonctionnant en évasion de fréquence comportant d'une part, une chaîne d'émission-réception pilotée par un synthétiseur de fréquence et d'autre part, un microprocesseur couplé à une mémoire, à la chaîne d'émission-réception et au synthétiseur de fréquence, comportant en outre des moyens pour permettre la recherche d'un plan de fréquences exploitables, la commande du synthétiseur de fréquence et la transmission du plan des fréquences, charactérisé en ce que la recherche du plan des fréquences exploitables est effectuée dans un plan de fréquences de base prédéterminé par le microprocesseur en sélectionnant dans les canaux de fréquence reçus celui qui présente le niveau de réception le plus faible pour déterminer un premier seuil minimum de comparaison, en calculant à partir du premier seuil un deuxième seuil de comparaison supérieur au premier seuil et en repérant dans les autres canaux reçus ceux dont les niveaux de réception donnent des niveaux de comparaison correspondants compris entre le premier seuil et le deuxième seuil.

L'invention a pour principal avantage qu'elle permet une amélioration importante de la qualité de la transmission. Elle peut être appliquée efficacement à tous les équipements tactiques haute fréquence portables ou portatifs, mobiles ou fixes où l'occupation du spectre des transmissions présente une gène considérable pour les liaisons phoniques ou numériques effectuées en évasion de fréquence.

D'autres caractéristiques et avantages de l'invention apparaîtront ci-après à l'aide de la description faite en regard des dessins annexés qui représentent :
- la figure 1 le procédé de transmission de l'information suivant l'invention sous la forme d'un organigramme ;
- la figure 2 un organigramme pour la recherche des plans de fréquences exploitables selon l'invention ;
- la figure 3 un dispositif pour la mise en oeuvre du procédé selon l'invention.

Le procédé selon l'invention s'applique à la transmission de l'information dans des réseaux de transmission formés de 2 à n émetteurs-récepteurs de radio fonctionnant en évasion de fréquence aléatoire, c'est-à-dire dans un mode de transmission où les informations sont portées sur des paliers de fréquences de durées déterminées comprises par exemple entre une dizaine de millisecondes et quelques centaines de millisecondes.

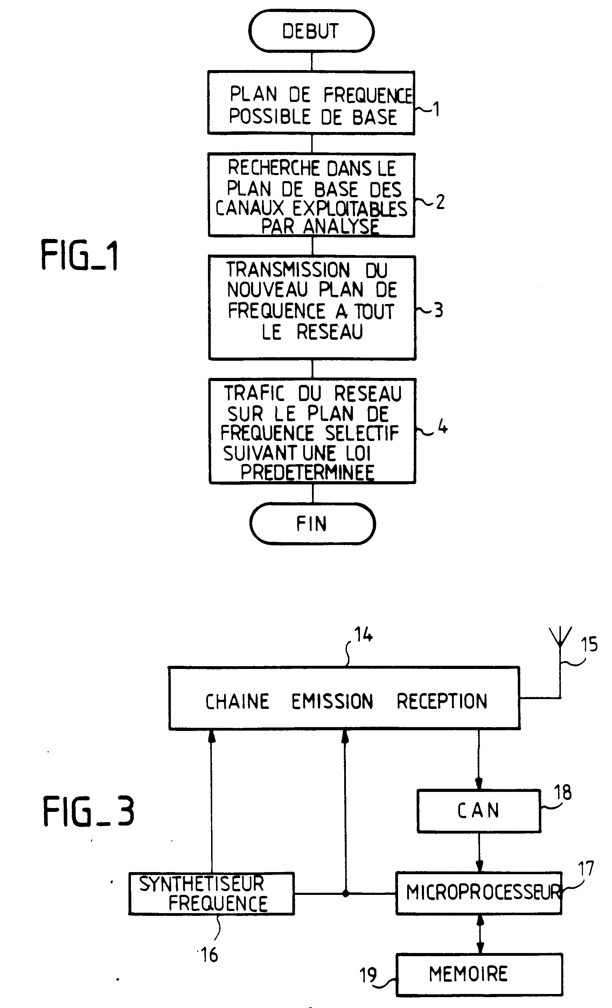

Il se déroule suivant les étapes 1 à 4 de l'organigramme de la figure 1 après une phase connue et non représentée de synchronisation des émetteurs-récepteurs entre eux. Aux étapes 1 et 2 un émetteur-récepteur appelé maître du réseau recherche dans un plan de fréquences de base comprenant un nombre déterminé de canaux, les canaux qui lui paraissent exploitables. Il transmet ensuite à l'étape 3 le plan des canaux jugés exploitables à tous les autres émetteurs-récepteurs du réseau. L'exploitation a lieu à l'étape 4, le trafic des informations entre tous les émetteurs-récepteurs du réseau ayant lieu en évasion de fréquence sur les paliers de fréquence exploitables communiqués à tout le réseau par l'émetteur-récepteur maître.

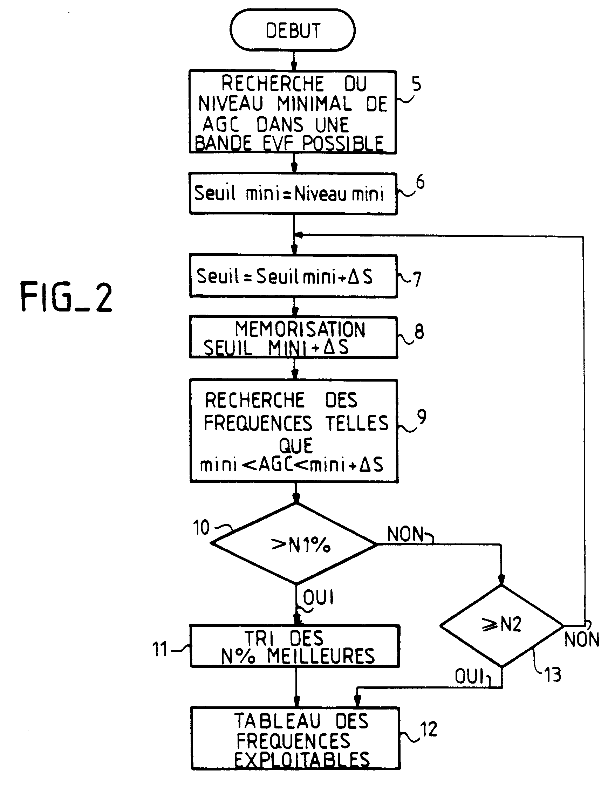

La recherche du plan des fréquences exploitables a lieu suivant les étapes 5 à 13 du procédé représenté par l'organigramme de la figure 2. A l'étape 5, le premier émetteur qui envoie de façon connue les tops de synchronisation à tout le réseau devient le maître du réseau et fait une recherche dans les canaux qu'il reçoit de celui qui présente le niveau de réception le plus faible. Cette recherche s'effectue par exemple, en mesurant dans la bande de réception du récepteur les niveaux de tension ou de courant fournis par le circuit de commande automatique de gain de la chaîne de réception sur chaque canal reçu par le récepteur en ne retenant que le canal qui donne le niveau Smini de tension ou de courant le plus faible. Le niveau de tension ou de courant obtenu est mémorisé à l'étape 6 et est utilisé à l'étape 7 pour calculer un deuxième seuil de comparaison S en ajoutant un talon ΔS de tension ou de courant au seuil minimum détecté. Le deuxième seuil de comparaison S est mémorisé à l'étape 8. A l'étape 9 une recherche en fréquence est effectuée dans le plan de fréquences de base en répertoriant celles pour lesquelles les niveaux en tension ou en courant correspondants fournis par le dispositif de contrôle automatique de gain sont compris entre le niveau minimum mémorisé à l'étape 6 et le deuxième seuil de comparaison calcule à l'étape 7. Si plus de (N1)% des fréquences remplissent la condition précédente alors un tri est effectué à l'étape 11 pour déterminer les (N1)% des fréquences qui donnent les niveaux en tension en courant les plus faibles. Les fréquences correspondantes sont mémorisées à l'étape 12 pour former un tableau des fréquences exploitables. Par contre, si à l'étape 10 le nombre des fréquences qui remplissent les conditions des tests effectués à l'étape 9 est inférieur au nombre déterminé des (N1)% des fréquences alors un nouveau test est effectué à l'étape 13 pour comparer le nombre des fréquences à un deuxième nombre égal à (N2)% des fréquences répertoriées à l'étape 9 et tel que N2 soit inférieur à N1. Si le nombre des fréquences remplissant la condition du test de l'étape 9 est supérieure ou égale au (N2)% des fréquences alors les fréquences correspondantes sont mémorisées à l'étape 12 pour constituer le tableau des fréquences exploitables. Par contre, si à l'étape 13 le nombre des fréquences remplissant la condition du test de l'étape 9 est inférieur au nombre (N2)% des fréquences, le procédé retourne à l'exécution des étapes 7 à 10 et un nouveau seuil est calculé à l'étape 7 en ajoutant un nouveau talon S au seuil minimum mémorisé à l'étape 6. Le procédé se poursuit ainsi tant que les tests des étapes 10 à 13 n'ont pas donné satisfaction.

Selon une variante possible de réalisation de l'invention le procédé précédemment décrit peut être modifié pour tenir compte du fait de situations où le réseau d'émetteurs-récepteurs peut être formé par des membres géographiquement très éloignés les uns des autres et soumis à des brouilleurs différents. Dans ce cas, est possible de concevoir que les fréquences considérées comme exploitables pourront être transmises par tout ou partie des membres du réseau au moment de l'initialisation et que c'est la concaténation de l'ensemble qui est alors utilisée pour effectuer le trafic entre tous les membres.

Un mode de mise en oeuvre du procédé selon l'invention dans un émetteur-récepteur est représenté à la figure 3. L'émetteur-récepteur représenté est composé de façon connue par une chaîne de réception 14 couplée à une antenne d'émission-réception 15. La chaîne de réception 14 est pilotée de façon connue par un synthétiseur de fréquence 16. Un microprocesseur 17 est couplé entre la chaîne de réception 14 et le synthétiseur de fréquence 16 au travers d'un convertisseur analogique numérique 18 qui transforme le niveau de tension ou de courant fourni par le dispositif de contrôle automatique de gain interne à la chaîne de réception 14, en échantillons numériques de signal et applique ces échantillons sur le port d'entrée des données du microprocesseur 17. Une mémoire 19 couplée également au microprocesseur 17 contient les instructions de programme nécessaires à l'exécution du procédé décrit précédemment à l'aide des organigrammes des figures 1 et 2.

La mémoire 19 mémorise également les seuils de décision et en fin d'analyse le tableau des fréquences exploitables. Le plan des fréquences mémorisées est utilisé pour commander la commutation en fréquence du synthétiseur de fréquence 16 pour permettre le fonctionnement de l'émetteur-récepteur en évasion de fréquence, il est également appliqué à la chaîne d'émission 14 pour exécuter sa transmission à l'ensemble des autres émetteurs-récepteurs du réseau. Cette transmission s'effectue par exemple en attribuant un numéro aux fréquences transmises.

## Revendications

1. Procédé de transmission de l'information entre émetteurs-récepteurs radioélectriques d'un même réseau fonctionnant en évasion de fréquence consistant
- à rechercher (2) au moyen d'au moins un poste émetteur-récepteur un plan de fréquences exploitables,
- à transmettre (3) le plan de fréquences exploitables aux autres émetteurs-récepteurs du réseau,
- et à effectuer (4) les transferts des communications en évasion de fréquence sur le plan des fréquences exploitables transmis à l'ensemble des émetteurs-récepteurs du réseau, et
caractérisé en ce que la recherche d'un plan de fréquences exploitables est effectuée (1) dans un plan de fréquences de base prédéterminé et est exécuté par l'émetteur-récepteur maître de la synchronisation dans le réseau qui effectue : une sélection (5) dans les canaux qu'il reçoit, de celui qui présente (6) le niveau de réception le plus faible pour déterminer un premier seuil minimum de comparaison, un calcul à partir du premier seuil d'un deuxième seuil de comparaison supérieur au premier seuil et un repérage dans les autres canaux reçus de ceux dont les niveaux de réception donnent des niveaux de comparaison correspondants compris entre le premier seuil et le deuxième seuil.

2. Procédé selon la revendication 1 caractérisé en ce qu'il consiste à ne conserver (10, 11, 12) comme canaux exploitables qu'un nombre limité de canaux dont les niveaux de réception sont les plus faibles.

3. Procédé selon l'une quelconque des revendications 1 et 2 caractérisé en ce qu'il consiste lorsque les émetteurs-récepteurs du réseau occupent des positions géographiques éloignées à faire déterminer les fréquences exploitables par tout ou partie des émetteurs-récepteurs du réseau et à effectuer une concaténation de l'ensemble de ces fréquences pour former le plan des fréquences exploitables.

4. Emetteur-récepteur radioélectrique fonctionnant en évasion de fréquence comportant d'une part, une chaîne d'émission-réception (14) pilotée par un synthétiseur de fréquence (16) et d'autre part, un microprocesseur (17) couplé à une mémoire (19), à la chaîne d'émission-réception (14) et au synthétiseur de fréquence (16), le microprocesseur étant programmé par un programme inscrit dans la mémoire (19) pour permettre la recherche d'un plan de fréquences exploitables, la commande du synthétiseur de fréquence (16) et la transmission du plan des fréquences, charactérisé en ce que la recherche du plan des fréquences exploitables est effectuée dans un plan de fréquences de base prédéterminé par le microprocesseur (17) en sélectionnant dans les canaux de fréquence reçus celui qui présente (6) le niveau de réception le plus faible pour déterminer un premier seuil minimum de comparaison, en calculant à partir du premier seuil un deuxième seuil de comparaison supérieur au premier seuil et en repérant dans les autres canaux reçus ceux dont les niveaux de réception donnent des niveaux de comparaison correspondants compris entre le premier seuil et le deuxième seuil.

## Patentansprüche

1. Informations-Übertragungsverfahren zwischen funkelektrischen Sende-Empfängern in einem gemeinsamen Netz, das mit Frequenzwechsel arbeitet, wobei das Verfahren darin besteht,
- mit Hilfe mindestens einer Sende-Empfangsstation einen Plan von verwertbaren Frequenzen zu suchen (2),
- den Plan der verwertbaren Frequenzen an die anderen Sende-Empfänger des Netzes zu übertragen (3),
- und die Informationsübertragungen mit Frequenzwechseln in dem Plan der verwertbaren Frequenzen durchzuführen, der an alle Sende-Empfänger des Netzes übermittelt worden ist, dadurch gekennzeichnet, daß die Suche nach einem Plan der verwertbaren Frequenzen in einem vorbestimmten Basisfrequenzplan erfolgt (1) und von dem für die Synchronisation des Netzes zuständigen zentralen Sende-Empfänger durchgeführt wird, indem dieser in den empfangenen Kanälen denjenigen auswählt (5), der den schwächsten Empfangspegel besitzt (6), um eine erste Mindestvergleichsschwelle zu bestimmen, indem dann ausgehend von dieser ersten Schwelle eine zweite, höhere Vergleichsschwelle als die erste Schwelle berechnet wird und in allen empfangenen Kanälen diejenigen ermittelt werden, deren Empfangspegel entsprechende Vergleichswerte ergibt, die zwischen der ersten Schwelle und der zweiten Schwelle liegen.

2. Verfahren nach Anspruch 1, dadurch gekennzeichnet, daß es darin besteht (10, 11, 12), als verwertbare Kanäle nur eine begrenzte Anzahl von Kanälen beizubehalten, deren Empfangspegel die schwächsten sind.

3. Verfahren nach einem beliebigen der Ansprüche 1 und 2, dadurch gekennzeichnet, daß es darin besteht, durch alle Sende-Empfänger des Netzes oder einen Teil davon die verwertbaren Frequenzen bestimmen zu lassen und eine Verkettung der Gesamtheit dieser Frequenzen zu bilden, die den Plan der verwertbaren Frequenzen ergeben, wenn die Sende-Empfänger des Netzes sehr weit voneinander entfernte geographische Positionen einnehmen.

4. Funkelektrischer Sende-Empfänger, der mit Frequenzwechseln arbeitet und einerseits eine Sende-Empfangskette (14), die von einem Frequenzsynthetisierer (16) gesteuert wird, und andererseits einen Mikroprozessor (17) enthält, der an einen Speicher (19), an die Sende-Empfangskette (14) und an den Frequenzsynthetisierer (16) gekoppelt ist und durch ein im Speicher (19) enthaltenes Programm programmiert wird, um die Suche nach einem Plan von verwertbaren Frequenzen, die Steuerung des Frequenzsynthetisierers (16) und die Übertragung des Frequenzplans zu ermöglichen, dadurch gekennzeichnet, daß die Suche nach dem Plan der verwertbaren Frequenzen in einem vorbestimmten Basisfrequenzplan vom Mikroprozessor (17) durchgeführt wird, indem in den unter den Empfangsfrequenzkanälen derjenige ausgewählt wird, der den geringsten Empfangspegel besitzt (6), um eine erste Mindestvergleichsschwelle zu bestimmen, indem dann aus der ersten Schwelle eine zweite Vergleichsschwelle berechnet wird, die über der ersten Schwelle liegt, und indem in den anderen Empfangskanälen diejenigen ermittelt werden, deren Empfangspegel zwischen der ersten und der zweiten Schwelle von Vergleichspegeln liegt.

## Claims

1. Process for transmitting information between radio transmitters/receivers of the same frequency-agile network consisting in
- searching (2), by means of at least one transmitter/receiver post, for a plan of operable frequencies,
- transmitting (3) the plan of operable frequencies to the other transmitters/receivers of the network,
- and performing (4) the transfers of the frequency-agile communications regarding the operable frequency plan transmitted to the set of transmitters/receivers of the network, and
characterized in that the search for a plan of operable frequencies is performed (1) within a predetermined base frequency plan and is executed by the transmitter/receiver piloting the synchronization in the network which performs: a selection (5), from the channels which it receives, of the one which exhibits (6) the lowest reception level in order to determine a first minimum comparison threshold, a calculation from the first threshold of a second comparison threshold greater than the first threshold and a tagging within the other channels received of those whose reception levels give corresponding comparison levels lying between the first threshold and the second threshold.

2. Process according to Claim 1, characterized in that it consists in retaining (10, 11, 12) as operable channels only a limited number of channels whose reception levels are the lowest.

3. Process according to either one of Claims 1 and 2, characterized in that it consists, when the transmitters/receivers of the network occupy distant geographical positions, in determining the frequencies operable by all or some of the transmitters/receivers of the network and in performing a concatenation of this set of frequencies in order to form the plan of the operable frequencies.

4. Frequency-agile radio transmitter/receiver including, on the one hand, a transmission/reception chain (14) driven by a frequency synthesizer (16) and, on the other hand, a microprocessor (17) coupled to a memory (19), to the transmission/reception chain (14) and to the frequency synthesizer (16), the microprocessor being programmed with a program registered in the memory (19) in order to allow the search for a plan of operable frequencies, the control of the frequency synthesizer (16) and the transmission of the plan of the frequencies, characterized in that the search for the plan of the operable frequencies is performed within a predetermined base frequency plan by the microprocessor (17) by selecting, from the frequency channels received, the one which exhibits (6) the lowest reception level in order to determine a first minimum comparison threshold, calculating from the first threshold a second comparison threshold greater than the first threshold and tagging within the other channels received those whose reception levels give corresponding comparison levels lying between the first threshold and the second threshold.
